Europäisches Patentamt

European Patent Office

Office européen des brevets

(19)

(11) **EP 1 538 613 A2**

(12) ## EUROPEAN PATENT APPLICATION

(43) Date of publication:
08.06.2005 Bulletin 2005/23

(51) Int Cl.[7]: **G11B 7/135**

(21) Application number: **04257362.6**

(22) Date of filing: **26.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU**<br><br>(30) Priority: **03.12.2003 JP 2003404333**<br><br>(71) Applicant: **Konica Minolta Opto, Inc.**<br>**Hachioji-shi, Tokyo 192-8505 (JP)** | (72) Inventor: **Kimura, Tohru c/o Konica Minolta Opto, Inc.**<br>**Hachioji-shi, Tokyo 192-8505 (JP)**<br><br>(74) Representative: **Nicholls, Michael John**<br>**J.A. KEMP & CO.**<br>**14, South Square**<br>**Gray's Inn**<br>**London WC1R 5JJ (GB)** |

(54) **Optical pickup apparatus and optical information recording and/or reproducing apparatus**

(57)     The invention relates to an optical pickup apparatus being capable conducting information recording and/or reproducing to at least three different optical information recording medium. Light flux having wavelength of λ1 is utilized for one of the three optical information recording mediums, and light flux having wavelength of λ2 is utilized for other two optical information recording mediums. λ1 and λ2 is different from each other.

FIG. 1

EP 1 538 613 A2

**Description**

**RELATED APPLICATION**

This application is based on Japanese Patent Application No. 2003-404333, the entire content of which is hereby incorporated by reference.

**TECHNICAL FIELD**

The present invention relates to an optical pickup apparatus and an optical information recording and/or reproducing apparatus.

**TECHNICAL BACKGROUND**

There has been known an optical pickup apparatus capable of recording and/or reproducing for optical discs of plural types each having different recording density. For example, there is available the one wherein recording and/or reproducing are conducted for DVD (digital versatile disc) and CD (compact disc) by the same optical pickup apparatus. For obtaining compatibility for optical discs in plural types each having a different recording density, there is a method wherein a light beam having a different wavelength is used in the optical pickup apparatus, and recording and/or reproducing are conducted for the optical disc having recording density corresponding to each wavelength. For example, there are given Japanese Un-examiner Patent Application Publication Nos. 2002-277732 and 2002-298422 respectively as Patent Document 1 and Patent Document 2.

The technology described in the Patent Document 1 is one wherein ring-shaped zone structures whose center is on the optical axis is provided on the surface of an objective lens, and plural stair-structures are formed in each of the ring-shaped zones, and it is a technology wherein a step of the stair-structure formed the in ring-shaped zone is set for either one wavelength (for example, $\lambda 2$) of recording/reproducing wavelength $\lambda 2$ for DVD and recording/reproducing wavelength $\lambda 3$ for CD so that an optical path difference is not added substantially at adjoining stair-structures and an optical path difference is given only to the wavelength (for example, $\lambda 3$) on the other side, and the incident light flux is diffracted wavelength-selectively, thus, spherical aberration caused by a difference of a protective layer thickness between DVD and CD is corrected.

In recent years, there has been a demand for an optical pickup apparatus having compatibility for a high density disc using a violet semiconductor laser and conventional DVD and CD, as optical discs each having different recording density. In an objective lens in the foregoing, it is possible to realize high transmittance even for any wavelength, while correcting spherical aberration caused by a difference of protective layer thickness between a high density disc and DVD or by a difference of recording/reproducing wavelength, by setting a step between adjoining stair-structures to the height calculated by $d = 2 \cdot \lambda 1/(N1 - 1)$ for recording/reproducing wavelength $\lambda 1$ of the high density disc, and by dividing one ring-shaped zone into five parts or six parts. Incidentally, N1 represents a refractive index of the objective lens for light with wavelength $\lambda 1$.

However, since the recording/reproducing wavelength $\lambda 3$ for CD is substantially twice the recording/reproducing wavelength $\lambda 1$ for the high density disc, an optical path difference of $1 \times \lambda 3$ is added to the light with wavelength $\lambda 3$, in the stair-structure wherein the step is determined to satisfy the aforesaid expression. This corresponds to that an optical path difference is not added substantially to the light with wavelength $\lambda 3$. Therefore, in the stair-structure of this kind, spherical aberration caused by a difference of protective layer thickness between the high density optical disc and CD or by a difference of recording/reproducing wavelength cannot be corrected.

Further, there has been known a technology to provide on the surface of an objective lens a diffractive structure of a blaze type wherein the order number of diffraction of the diffracted light generated when recording/reproducing wavelength $\lambda 2$ of DVD enters is lower than the order number of diffraction of the diffracted light generated when recording/reproducing wavelength $\lambda 1$ of the high density optical disc enters, as described in Patent Document 2.

For example, by making the order number of diffraction of the diffracted light generated when light with wavelength $\lambda 1$ enters to be 2 and by making the order number of diffraction of the diffracted light generated when light with wavelength $\lambda 2$ enters to be 1, it is possible to correct spherical aberration caused by a difference of protective layer thickness between a high density optical disc and DVD or by a difference of recording/reproducing wavelength, by utilizing a difference of diffracting actions (diffraction angles) for each wavelength, while securing high diffraction efficiency for each wavelength.

However, diffracting actions (diffraction angles) for wavelength $\lambda 1$ are substantially the same as diffracting actions (diffraction angles) for wavelength $\lambda 3$ because the wavelength $\lambda 3$ is almost twice the wavelength $\lambda 1$. Therefore, spherical aberration caused by a difference of protective layer thickness between the high density disc and CD or by a difference of recording/reproducing wavelength cannot be corrected in the diffractive structure of this kind, although high diffraction efficiency can be secured for wavelength λ3.

From the foregoing, when utilizing the diffractive structure described in the Patent Documents 1 and 2, the diffracting actions can hardly be utilized, for correcting the spherical aberration caused by a difference of protective layer thickness between the high density disc and CD or by a difference of recording/reproducing wavelength. It is therefore necessary to correct the spherical aberration caused by a difference of protective layer thickness between the high density disc and CD or by a difference of recording/reproducing wavelength, by making an angle of divergence of incident light with wavelength λ3 on an objective lens to be different from an angle of divergence of incident light of a high density optical disc.

However, for correcting spherical aberration caused by a difference of protective layer thickness between the high density disc and CD or by a difference of recording/reproducing wavelength, it is necessary to set a divergence degree for light with wavelength λ3 to be great when light with wavelength λ1 is parallel light, and thereby, a large coma aberration is caused when tracking of the objective lens takes place, and excellent tracking characteristics cannot be obtained, which is a problem.

Incidentally, as a standard for the high density optical disc that employs a violet semiconductor laser as a light source for recording/reproducing, there are proposed two types including a Blu-ray disc (BD) and High-Density DVD (HD DVD).

BD is an optical disc on which recording/reproducing is conducted by an objective lens having a protective layer whose thickness is 0.1 mm and having a numerical aperture of 0.85, while, HD DVD is an optical disc on which recording/reproducing is conducted by an objective lens having a protective layer whose thickness is 0.6 mm which is the same as that of DVD and having a numerical aperture of 0.65.

In order to attain compatibility between the high density optical disc and DVD, it is necessary to correct the spherical aberration caused by a difference of protective layer thickness between the high density disc and DVD or by a difference of recording/reproducing wavelength. On the other hand, in the case of the HD DVD, it is necessary to correct the spherical aberration caused by a difference of recording/reproducing wavelength.

In view of the problems stated above, an object of the invention is to provide an optical pickup apparatus and an optical information recording and/or reproducing apparatus wherein recording/reproducing can be conducted for three different types of recording media and occurrence of coma aberration caused by tracking of an objective lens in conducting recording/reproducing for CD can be reduced.

**SUMMARY**

The aspect mentioned above can be achieved by the structures described below.

The first structure is an optical pickup apparatus comprising a first light source emitting a first light flux with wavelength λ1, a second light source emitting a second light flux with wavelength λ2 and a light-converging optical system including at least an objective lens. In the optical pickup apparatus of the first structure, a diffractive structure is formed on at least one optical surface of the aforesaid light-converging optical system, the first light flux is used to conduct recording and/or reproducing of information for the first optical disc having a protective layer having a thickness of t1, the second light flux is used to conduct recording and/or reproducing of information for the second optical disc having a protective layer having a thickness of t2, t2 being same as or larger than t1, and having recording density that is lower than that of the first optical disc and the second light flux is used to conduct recording and/or reproducing of information for the third optical disc having a protective layer having a thickness of t3, t3 being larger than t2, and having recording density that is lower than that of the second optical disc.

The second structure is an optical pickup apparatus having therein a first light source emitting a first light flux with wavelength λ1, a second light source emitting a second light flux with wavelength λ2, a third light source emitting a third light flux with wavelength λ2, and a light-converging optical system including at least an objective lens.

In the optical pickup apparatus of the second structure, a diffractive structure is formed on at least one optical surface of the aforesaid light-converging optical system, the first light flux is used to conduct recording and/or reproducing of information for the first optical disc having a protective layer having a thickness of t1, the second light flux is used to conduct recording and/or reproducing of information for the second optical disc having a protective layer having a thickness of t2, t2 being same as or larger than t1, and having recording density that is lower than that of the first optical disc, and the third light flux is used to conduct recording and/or reproducing of information for the third optical disc having a protective layer having a thickness of t3, t3 being larger than t2, and having recording density that is lower than that of the second optical disc.

In the first structure and the second structure stated above, by conducting recording/reproducing for CD by the diffractive structure with the second light flux that receives diffracting actions different from those of the first light source or with the third light flux having the same wavelength as that of the second light flux, the spherical aberration caused by a difference of protective layer thickness between the high density optical disc and CD can be corrected. As a result, occurrence of coma aberration caused by tracking of the objective lens can be reduced because it is not necessary to set the magnification of the objective lens to be small in the case of conducting recording/reproducing of CD, thus, excellent tracking characteristics can be obtained.

The invention itself, together with further objects and attendant advantages, will best be understood by reference to the following detailed description taken in conjunction with the accompanying drawings.

**BRIEF DESCRIPTION OF DRAWINGS**

Fig. 1 is a plan view of primary parts showing the structure of an optical pickup apparatus.
Figs. 2(a) to 2(c) are diagrams showing the structure of an objective optical system representing a part of a light-converging optical system.
Figs. 3(a) to 3(c) are diagrams showing the structure of a diffraction lens.
Fig. 4 is a plan view of primary parts showing the structure of an optical pickup apparatus.
Fig. 5 is a plan view of primary parts showing the structure of an optical pickup apparatus.
Fig. 6 is a graph showing lens shift characteristics of objective optical system OBJ.

**DETAILED DESCRIPTION OF THE INVENTION**

As stated above, in the present specification, optical discs using a violet semiconductor laser and a violet SHG laser as a light source for recording/reproducing of information are called (high density optical disc" generically, and Blu-Ray Disc (BD) representing the optical disc that conducts recording/reproducing of information with an objective optical system with NA 0.85 and has a standard of a protective layer thickness of about 0.1 mm and also High-Density DVD (HD DVD) representing an optical disc that conducts recording/reproducing of information with an objective optical system with NA 0.65 and has a standard of about 0.6 mm for the protective layer thickness, are included. Further, in addition to the optical disc having on its information recording surface the protective layer of this kind, the optical disc having on its information recording surface a protective layer with a thickness of several - several tens +nm and the optical disc wherein a thickness of a protective layer or a protective film is 0 are included. Further, in the present specification, a magnetooptical disc employing a violet semiconductor laser or a violet SHG laser as a light source for recording/reproducing of information is also included in the high density optical disc.

Further, in the present specification, optical discs of a DVD series such as DVE-ROM, DVD-Video, DVD-Audio, DVD-RAM, DVD-R, DVD-RW, DVD+R and DVD+RW are called "DVD" generically and optical discs of a CD series such as CD-ROM, CD-Audio, CD-Video, CD-R and CD-RW are called "CD" generically.

Further, in the present specification, the order number of diffraction $n_i$ of the diffracted light generated when $i^{th}$ light flux enters the blazed diffractive structure, the stepwise diffractive structure or the superposition diffractive structure means the order number of diffraction of the diffracted light having the maximum diffraction efficiency among various diffracted light generated when $i^{th}$ light flux enters the diffractive structure.

It is preferable that wavelength $\lambda1$ and wavelength $\lambda2$ satisfy the following relationship, in the aforesaid first structure and the second structure.

$$0.2 \leq |\, int\, (\lambda2/\lambda1) - \lambda2/\lambda1\, | \leq 0.5$$

In the expression above, Int ($\lambda2/\lambda1$) indicates the integer that is closest to $\lambda2/\lambda1$.

When wavelength $\lambda1$ and wavelength $\lambda2$ satisfy the relationship above, effects of the invention are exhibited more splendidly.

It is further preferable that the following relationship is satisfied.

$$\lambda1 \leq 450\ nm$$

$$630\ nm \leq \lambda2 \leq 680\ nm$$

It is one of the preferable structures that the light-converging optical system has therein the objective lens and a diffraction lens having an optical surface on which the diffractive structure is formed, in the optical pickup apparatuses respectively of the first structure and the second structure. In this case, in the first structure, the objective lens converges the first light flux which has passed through the diffraction lens on the information recording surface of the first optical disc and converges the second light flux which has passed through the diffraction lens respectively on the information recording surface of the second optical disc and on the information recording surface of the third optical disc. In the second structure, the objective lens converges the first, second and third light fluxes which have passed through the diffraction lens respectively on the information recording surfaces of the first, second and third optical discs.

In this case, it is preferable that the objective lens and the diffraction lens are formed integrally, the optical pickup apparatus further has an actuator and the actuator drives the objective lens and the diffraction lens in the direction perpendicular to the optical axis of the light-converging optical system.

Since the foregoing structure makes it possible to control occurrence of coma caused by disagreement of optical axes between the diffraction lens and the objective lens in the case of tracking of the objective lens, it is possible to make the tracking properties of the objective lens in the case of conducting recording/reproducing for a high density optical disc, DVD and CD to be excellent.

Further, in the first structure and the second structure stated above, it is also one of the preferable embodiments that the diffractive structure is formed on at least one optical surface of the objective lens.

In the first structure, it is preferable that the diffractive structure has ring-shaped zones in a shape of plural concentric circles whose centers are on the optical axis of the light-converging optical system, the diffractive structure is of a superposition diffractive structure wherein a plurality of stepwise structures are formed on each ring-shaped zone and the superposition diffractive structure does not give substantially a phase difference to the first light flux but gives a phase difference to the second light. In the same way, in the second structure, it is preferable that the diffractive structure has ring-shaped zones in a shape of plural concentric circles whose centers are on the optical axis of the light-converging optical system, the diffractive structure is of a superposition diffractive structure wherein a plurality of stepwise structures are formed on each ring-shaped zone and the superposition diffractive structure does not give substantially a phase difference to the first light flux but gives a phase difference to the second light flux and the third light flux.

When the superposition diffractive structure of this kind is used, it is further preferable that thickness t1 of a protective layer of the first optical disc and t2 of a protective layer of the second optical disc satisfy the following relationship.

$$t1 < t2$$

Further, it is more preferable that t1 and t2 satisfy the following relational expression.

$$t1 < 0.2 \text{ mm}$$

$$0.55 \text{ mm} \leq t2 \leq 0.65 \text{ mm}$$

It is further preferable to satisfy the following relationship.

$$\lambda 1 \leq 450 \text{ nm}$$

$$630 \text{ nm} \leq \lambda 2 \leq 680 \text{ nm}$$

$$3 \leq N \leq 10 \tag{1}$$

$$d = 2m \cdot \lambda 1 / (N1 - 1) \tag{2}$$

$$0 < | \text{INT} (\phi 2) - \phi 2 | \leq 0.4 \tag{3}$$

$$\phi 2 = d \cdot N \cdot (N2 - 1) / \lambda 2 \tag{4}$$

In the expressions above, N represents the number of the stepwise structures on a given ring-shaped zone of the superposition diffractive structure, d μm represents a height of the step between adjoining stepwise structures on the given ring-shaped zone, φ2 represents an optical path added to the second light flux (and the third light flux) by the given ring-shaped zone, m represents a positive integer of not more than 5, N1 represents the refractive index of the optical element having an optical surface having the diffractive structure for the light flux with wavelength λ1, N2 represents the refractive index of the optical element having an optical surface having the diffractive structure for the light flux with wavelength λ2, and INT (φ2) represents an integer closest to φ2.

The foregoing structure relates to the preferable form of the superposition diffractive structure for correcting properly the spherical aberration caused by a difference of protective layer thickness between the high density optical disc and DVD, while securing high transmittance for recording/reproducing wavelength for the high density optical disc and for recording/reproducing wavelengths for DVD and CD. When the number of division N of each ring-shaped zone and step d between adjoining stepwise structures are determined to satisfy expression (1) and expression (2), a width of each stepwise structure does not become too small and a height of each ring-shaped zone in the optical axis direction does not become too great, which makes it possible to process easily a metallic mold for the superimposed type of diffractive structure, and to control a decline of transmittance caused by individual differences of oscillation wavelength of a semiconductor laser light source. When the number of division N of each ring-shaped zone and step d between adjoining stepwise structures are determined so that amount of addition φ2 for each ring-shaped zone for the second light flux (and the third light flux) may satisfy the expression (3), it is possible to enhance the transmittance for the second light flux (and the third light flux).

In the optical pickup apparatuses respectively of the first structure and the second structure, it is also one of the preferable embodiments that the diffractive structure has ring-shaped zones in a shape of concentric circles having their centers on the optical axis of the light-converging optical system, and the diffractive structure is a blazed diffractive structure wherein a sectional view including the optical axis is in a saw-tooth shape.

In the optical pickup apparatuses respectively of the first structure and the second structure, it is also one of the preferable embodiments that the diffractive structure is formed on an optical surface that is a concave surface or a convex surface macroscopically to have ring-shaped zones in a shape of plural concentric circles having their centers on the optical axis of the light-converging optical system, and is of the stepwise diffractive structure wherein a sectional view including the optical axis is in a stepwise shape.

In the first structure, it is further preferable that diffraction order number n2 of the diffracted light generated when the second light flux enters satisfies the following relationship for diffraction order number n1 (n1 ≥ 2) of the diffracted light generated when the first light flux in the blazed diffractive structure and the stepwise diffractive structure.

$$n2 < n1$$

In the same way, even in the first structure, it is further preferable that diffraction order number n2 of the diffracted light generated when the second light flux and the third light flux enter satisfies the following relationship for diffraction order number n1 (n1 ≥ n2) of the diffracted light generated when the first light flux in the blazed diffractive structure and the stepwise diffractive structure.

$$n2 < n1$$

By determining the step between the adjoining ring-shaped zones in the blazed diffractive structure or in the stepwise diffractive structure so that diffraction order number n2 of the second light flux (and the third light flux) may be lower in terms of the order number than the diffraction order number n1 of the first light flux, it is possible to correct the spherical aberration caused by a difference of protective layer thickness between the high density optical disc and DVD or by a difference of recording/reproducing wavelength, while securing high diffraction efficiency for all wavelengths.

When the blazed diffractive structure or the stepwise diffractive structure stated above is used, it is preferable that thickness t1 of the protective layer of the first optical disc and thickness t2 of the protective layer of the second optical disc satisfy the following structure.

$$t1 = t2$$

In particular, 0.55 mm ≤ t1 and t2 ≤ 0.65 mm are preferable.

Further, when the blazed diffractive structure or the stepwise diffractive structure stated above is used, it is preferable that the combination of the n1 and n2 is any one of

(n1, n2) = (2, 1), (3, 2), (5, 3), (8, 5) and (10, 6) and the following relational expression is satisfied.

$$\lambda 1 \leq 450 \text{ nm}$$

$$630 \text{ nm} \leq \lambda 2 \leq 680 \text{ nm}$$

Compatibility between the high density optical disc and DVD can be attained by utilizing diffracting functions by means of the diffractive structure. However, when designing a compatible optical system, it is preferable to select a type of the diffractive structure in accordance with the type of the high density optical disc.

When using BD as a high density optical disc, it is necessary, for achievement of compatibility, to correct spherical aberration caused by a difference of protective layer thickness between BD and DVD as stated above. In such a case, when a blazed diffractive structure or a stepwise diffractive structure, which diffracts any wavelength, the wavelength-dependency of the spherical aberration caused by the diffractive structure grows greater, and an influence by individual differences of oscillation wavelength of the laser light source grows greater. Therefore, the superposition diffractive structure that diffracts the wavelength on one side selectively is preferably used. On the other hand, when HD DVD is used as a high density optical disc, spherical aberration caused by a difference of recording/reproducing wavelength has only to be corrected. Therefore, compared with an occasion where BD is used as a high density optical disc, the spherical aberration to be corrected becomes smaller. In this case, the blazed diffractive structure or the stepwise diffractive structure which can be manufactured easily is preferably used, rather than the superposition diffractive structure wherein the structure is complicated.

In the first structure and the second structure stated above, when NA2 represents a numerical aperture of the objective lens in the case of conducting recording and/or reproducing of information for the second optical disc with the second light flux, it is preferable that the diffractive structure is formed in an area corresponding to the inside of the NA2, and the following relational expression is satisfied.

$$t1 \leq 0.2 \text{ mm}$$

$$0.55 \text{ mm} \leq t2 \leq 0.65 \text{ mm}$$

In the structure of this kind, the spherical aberration caused by a difference of protective layer thickness between a high density optical disc and DVD and by a difference of recording/reproducing wavelength can be corrected only within numerical aperture NA2 of the objective lens in the case of conducting recording/reproducing for DVD. Therefore, a spot is not stopped down more than necessary and an amount of coma caused by a tilt of DVD does not grow too large. Further, the second light flux that passes through an area that is outside the numerical aperture NA2 has spherical aberration caused by a difference of protective layer thickness between the high density optical disc and DVD and by a difference of recording/reproducing wavelength, and it becomes flare component that does not contribute to formation of a spot on an information recording surface of DVD. Since this is equivalent to the diffractive structure that has an aperture switching function for DVD, it is not necessary to provide separately a diaphragm corresponding to NA2, and its structure can be made simple.

In the optical pickup apparatus of the first structure, it is preferable that the light-converging optical system has the objective lens and a diffraction lens having the optical surface on which the diffractive structure is formed, and the objective lens converges the first light flux having passed through the diffraction lens on the information recording surface of the first optical disc, and converges the second light flux having passed through the diffraction lens on information recording surfaces respectively of the second optical disc and the third optical disc, and further satisfies the following relational expressions;

$$1.15 \text{ mm} \leq t3 \leq 1.25 \text{ mm}$$

$$-0.01 \leq m3 < 0 \qquad (5)$$

wherein, m3 represents the magnification of a composite optical system including the diffraction lens and the objective lens, in the case of conducting recording and/or reproducing of information for the third optical disc by the second light flux.

Equally, in the optical pickup apparatus with the second structure, it is preferable that the light-converging optical system has the objective lens and the diffraction lens having an optical surface on which the diffractive structure is formed, and the objective lens converges the first light flux, the second light flux and the third light flux which have passed through the diffraction lens respectively on information recording surfaces respectively of the first optical disc, the second optical disc and the third optical disc, and satisfies the following relational expressions;

$$1.15 \text{ mm} \le t3 \le 1.25 \text{ mm}$$

$$-0.01 \le m3 < 0 \qquad\qquad (5)$$

wherein, m3 represents the magnification of a composite optical system including the diffraction lens and the objective lens, in the case of conducting recording and/or reproducing of information for the third optical disc by the third light flux.

These structures mentioned above relates to a range of magnification of the composite system including the diffraction lens and the objective lens, in the case of conducting recording/reproducing for CD when using the second light flux identical to DVD (or the third light flux that is the same as the second light flux in terms of a wavelength) as recording/reproducing wavelength for CD. When optimizing a width of each ring-shaped zone of the diffractive structure so that spherical aberration caused by a difference of protective layer thickness and a difference of recording/reproducing wavelength between a high density optical disc and DVD may be corrected, there still is residual spherical aberration corresponding to a difference of protective layer thickness between DVD and CD. For correcting this residual spherical aberration, it is preferable to establish magnification m3 of a composite optical system including the diffraction lens and the objective lens in the case of conducting recording/reproducing for CD in a way that the magnification satisfies the expression (5) above. When using a light flux whose wavelength is close to conventional 785 nm as a recording/reproducing wavelength for CD, magnification m3 needs to be established to be in a range that is smaller than that of the expression (5) above, which increases occurrence of coma aberration caused by tracking of the objective lens. However, by using the second light flux identical to DVD as a recording/reproducing wavelength for CD, a range for the magnification m3 can be made to be the same as the range in the expression (5), thereby, occurrence of coma aberration caused by tracking of the objective lens can be reduced.

In the optical pickup apparatus with the first structure, it is preferable that a spherical aberration correcting means to correct spherical aberration that is caused when conducting recording and/or reproducing of information for the third optical disc by the third light flux is provided, and the following relational expression is satisfied.

$$1.15 \text{ mm} \le t3 \le 1.25$$

Equally, in the optical pickup apparatus with the second structure, it is preferable that a spherical aberration correcting means to correct spherical aberration that is caused when conducting recording and/or reproducing of information for the third optical disc by the second light flux is provided, and the following relational expression is satisfied.

In place of setting magnification m3 of the composite optical system including the diffraction lens and the objective lens to satisfy the expression (5), it is also possible to provide a spherical aberration correcting means to correct spherical aberration that is caused when conducting recording and/or reproducing of information for the third optical disc by the second light flux (or the third light flux). Or, it is also possible to establish m3 to be greater and thereby to make the structure wherein the residual spherical aberration is corrected by the spherical aberration correcting means, which makes it possible to improve tracking characteristics in the case of recording/reproducing for CD.

In the optical pickup apparatus with the first structure, it is preferable that numerical aperture NA3 of the objective lens in the case of conducting recording and/or reproducing of information for the third optical disc by the second light flux satisfies the following relational expression.

$$0.36 < NA3 < 0.43$$

Equally, in the optical pickup apparatus with the second structure, it is preferable that numerical aperture NA3 of the objective lens in the case of conducting recording and/or reproducing of information for the third optical disc by the third light flux satisfies the following relational expression.

$$0.36 < NA3 < 0.43 \qquad\qquad (6)$$

The foregoing structure relates to the range of the numerical aperture of the objective lens in the case of conducting recording/reproducing for CD. When using a light flux whose wavelength is close to conventional 785 nm as a recording/reproducing wavelength for CD, numerical aperture NA3 of the objective lens is 0.45 or 0.50, and a spot diameter obtained by this wavelength and numerical aperture is 1.43 $\mu$m or 1.29 $\mu$m. When using the second light flux whose wavelength is the same as the recording/reproducing wavelength for DVD or the third light flux whose wavelength is the same as that of the second light flux as a recording/reproducing wavelength for CD, as in the optical pickup apparatus of the invention, the numerical aperture NA3 that is needed for obtaining the aforesaid spot diameter is 0.375 or 0.417 (provided that the wavelength of the second light flux is 655 nm). Therefore, in the optical pickup apparatus of the invention, a desired spot diameter necessary for recording/reproducing for CD can be obtained by setting the numerical aperture NA3 so that it satisfies the expression (6). Though the coma aberration caused in the objective lens increases in proportion to NA$^3/\lambda$ (NA represents a numerical aperture of the objective lens, and $\lambda$ represents a wave of incidence to the objective lens), occurrence of coma aberration caused by tracking of the objective lens can be controlled more, compared with an occasion where a light flux whose wavelength is close to 785 nm is used as a recording/reproducing wavelength, because numerical aperture NA3 of the objective lens in the case of conducting recording/reproducing for CD is set within a range of the expression (6) in the optical pickup apparatus of the invention.

In the optical pickup apparatus with the first structure, when NA2 represents a numerical aperture of the objective lens in the case of conducting recording and/or reproducing of information for the second optical disc by the second light flux and NA3 represents a numerical aperture of the objective lens in the case of conducting recording and/or reproducing of information for the third optical disc by the second light flux, it is preferable that the optical pickup apparatus further has an aperture element that switches an aperture of the objective lens in accordance with a difference between the NA2 and the NA3.

Equally, even in the optical pickup apparatus with the second structure, when NA2 represents a numerical aperture of the objective lens in the case of conducting recording and/or reproducing of information for the second optical disc by the second light flux and NA3 represents a numerical aperture of the objective lens in the case of conducting recording and/or reproducing of information for the third optical disc by the third light flux, it is preferable that the optical pickup apparatus further has an aperture element that switches an aperture of the objective lens in accordance with a difference between the NA2 and the NA3.

In the foregoing structure, the spot is not stopped down more than necessary in the case of conducting recording/reproducing for CD, an amount of coma aberration caused by a tilt of CD does not grow greater too much and occurrence of coma aberration caused by tracking of the objective lens can be reduced. The aperture element of this kind may include a variable diaphragm that can change a size of its aperture depending on recording density of the optical disc that requires recording/reproducing, the one wherein a diaphragm corresponding to a numerical aperture is prepared for each type of an optical disc, and a diaphragm to be inserted in an optical path between the light source and an optical disc is switched mechanically depending on recording density of the optical disc that require recording/reproducing, a polarization filter having polarization-dependency of the transmittance, a liquid crystal shutter and a polarization hologram. In addition, the aperture element may either be arranged in an optical path between the light source and the diffraction lens, in an optical path between the diffraction lens and the objective lens, or in an optical path between the objective lens and an optical disc.

Further, it is preferable that the aperture element is provided with a plane of polarization converting means that converts, based on control signals from the outside, a plane of polarization of the second light flux (and the third light flux) entering the objective lens by a prescribed amount. It is a preferred embodiment that the plane of polarization converting means is composed of a liquid crystal element.

The aperture element switching an aperture of the objective lens in accordance with a difference between the NA2 and the NA3 which is of the structure to have the plane of polarization converting means that converts the plane of polarization of the second light flux entering the objective lens by a prescribed amount can make the structure of the aperture element to be simple, which is preferable. In particular, when the plane of polarization converting means is composed of a liquid crystal element and is used in a form of combination with the polarization filter, an aperture element in a simple structure having no mechanically movable portions can be obtained.

As a third structure of the invention, there is given an optical information recording and/or reproducing apparatus having the optical pickup apparatus and a holding member that holds the first optical disc, the second optical disk or the third optical disc in the case of conducting recording and/or reproducing of information. The optical information recording and/or reproducing apparatus of this kind naturally makes it possible to obtain the same effect as in the foregoing optical pickup apparatus.

**PREFERRED EMBODIMENTS OF THE INVENTION**

Preferred embodiments to practice the invention will be explained in detail as follows, referring to the drawings.

(First Embodiment)

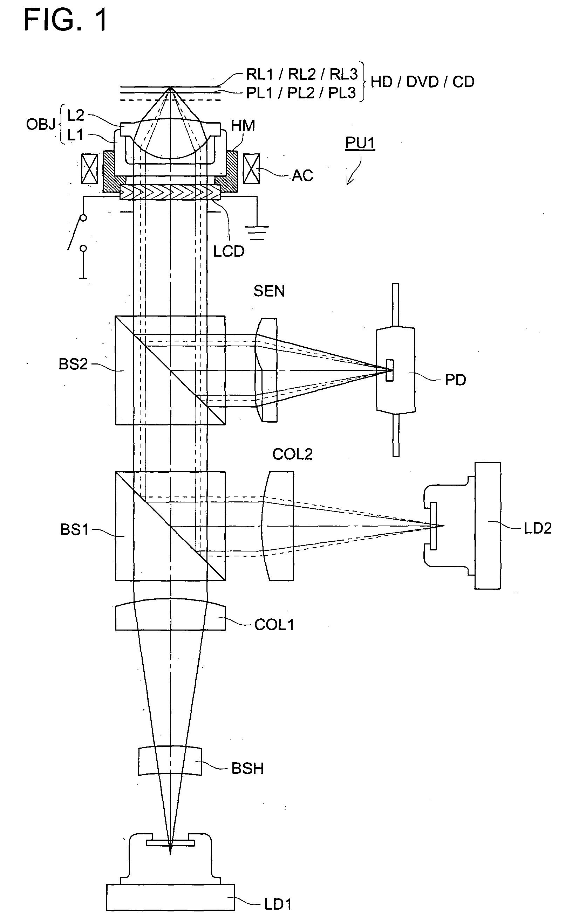

Fig. 1 is a diagram showing schematically the structure of first optical pickup apparatus PU1 capable of conducting recording/reproducing of information properly for high density optical disc HD (first optical disc), DVD (second optical disc) and CD (third optical disc). Optical specifications of the high density optical disc HD include wavelength $\lambda 1 = 408$ nm, thickness t1 of protective layer PL1 = 0.0875 mm and numerical aperture NA1 = 0.85, optical specifications of DVD include wavelength $\lambda 2 = 658$ nm, thickness t2 of protective layer PL2 = 0.6 mm and numerical aperture NA2 = 0.65, and optical specifications of CD include wavelength $\lambda 2 = 658$ nm, thickness t3 of protective layer PL3 = 1.2 mm and numerical aperture NA3 = 0.386, wherein a combination of the wavelength, the thickness of the protective layer and the numerical aperture is not limited to the foregoing combination.

The first optical pickup apparatus PU1 shown in Fig. 1 is an optical pickup apparatus capable of conducting recording/reproducing of information properly for high density optical disk HD (first optical disc), DVD (second optical disc) and CD (third optical disc). The is composed of violet semiconductor laser LD1 (first light source) that emits light when conducting recording/reproducing of information for high density optical disc HD and emits the first light flux with wavelength 408 nm, red semiconductor laser LD2 (second light source) that emits light when conducting recording/ reproducing of information for DVD and CD and emits the second light flux with wavelength 658 nm, photodetector PD that is used commonly for the first light source and the second light source, beam shaping element BSH for changing a sectional form of a laser beam emitted from violet semiconductor laser LD1 from an oval form to a circular form, objective optical system OBJ axis actuator AC having a function to converge each light flux on information recording surfaces RL1 and RL2, first beam splitter BS1, second beam splitter BS2, first collimating optical system COL1, second collimating optical system COL2, diaphragm STO, sensor lens SEN and liquid crystal element LCD (aperture element).

When conducting recording/reproducing of information for high density optical disc HD in the optical pickup apparatus PU1, the violet semiconductor laser LD1 is first made to emit light as its path of a ray of light is drawn with solid lines in Fig. 1. A divergent light flux emitted from violet semiconductor laser LD1 is changed in terms of its sectional form from an oval form to a circular form while it is passing through beam shaping element BSH, then, it is converted into a parallel light flux while it is transmitted through first collimating optical system COL1, and it passes successively through first beam splitter BS1, second beam splitter BS2 and liquid crystal element LCD to become a spot formed by objective optical system OBJ on information recording surface RL1 through protective layer PL1 of high density optical disc HD.

Incidentally, objective optical system OBJ will be explained in detail later.

The objective optical system OBJ conducts focusing and tracking with biaxial actuator AC arranged on the circumference of the objective optical system OB. A reflected light flux modulated by information pits on information recording surface RL1 passes again through objective optical system OBJ and liquid crystal element LCD, then, is branched by second beam splitter BS2, and is given astigmatism when it passes through sensor lens SEN to be converged on light-receiving surface of photodetector PD. Thus, it is possible to read information recorded on high density optical disc HD by using output signals of photodetector PD.

When conducting recording/reproducing of information for DVD, the red semiconductor laser LD2 is first made to emit light as its path of a ray of light is drawn with dotted lines.in Fig. 1. A divergent light flux emitted from red semiconductor laser LD2 is converted into a parallel light flux while it is transmitted through second collimator optical system COL2, and then, is reflected on the first beam splitter BS1, and passes successively through the second beam splitter BS2 and liquid crystal element LCD to become a spot formed by objective optical system OBJ on information recording surface RL2 through protective layer PL2 of DVD.

Then, the objective optical system OBJ conducts focusing and tracking with biaxial actuator AC arranged on the circumference of the objective optical system OB. A reflected light flux modulated by information pits on information recording surface RL2 passes again through objective optical system OBJ and liquid crystal element LCD, then, is branched by second beam splitter BS2, and is given astigmatism when it passes through sensor lens SEN to be converged on light-receiving surface of photodetector PD. Then, it is possible to read information recorded on DVD by using output signals of photodetector PD.

When conducting recording/reproducing of information for CD, the red semiconductor laser LD2 is first made to emit light as its path of a ray of light is drawn with two-dot chain lines in Fig. 1. A divergent light flux emitted from red semiconductor laser LD2 is converted into a parallel light flux while it is transmitted through second collimator optical system COL2, and then, is reflected on the first beam splitter BS1, and passes successively through the second beam splitter BS2 and liquid crystal element LCD to become a spot formed by objective optical system OBJ on information recording surface RL3 through protective layer PL3 of CD.

Then, the objective optical system OBJ conducts focusing and tracking with biaxial actuator AC arranged on the circumference of the objective optical system OBJ. A reflected light flux modulated by information pits on information recording surface RL3 passes again through objective optical system OBJ and liquid crystal element LCD, then, is branched by second beam splitter BS2, and is given astigmatism when it passes through sensor lens SEN to be converged on light-receiving surface of photodetector PD. Then, it is possible to read information recorded on CD by using output signals of photodetector PD.

Next, the structure of the objective optical system OBJ will be explained.

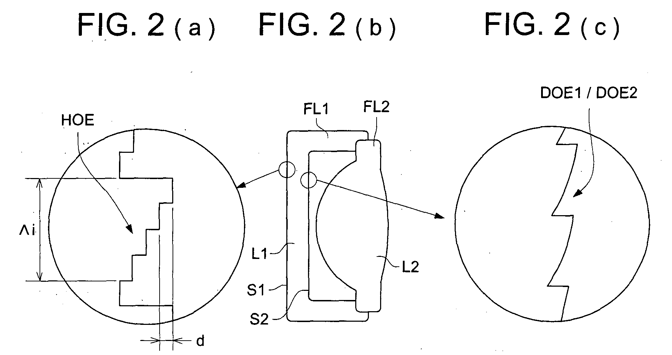

The objective optical system OBJ is composed of diffraction lens L1 and the objective lens L2 that has a function to converge a laser light flux transmitted through the diffraction lens L1 on an information recording surface of an optical disc and has an aspheric surface on each of its both sides, as shown in Fig. 2. Each of the diffraction lens L1 and the objective lens L2 is a plastic lens, and on circumferences of the respective optical functional sections of them, there are formed respectively flange portions FL1 and FL2 each being united solidly with the optical functional section, and both of them are united solidly when a part of the flange portion FL1 and a part of the flange portion FL2 are fitted together. Though the diffraction lens equipped with the diffractive structure is provided separately in the present embodiment, the diffractive structure may also be provided on the optical surface of the objective lens, making it unnecessary to provide the diffraction lens separately in that case.

With respect to optical specifications for high density optical disc HD, DVD and CD which are assumed in the case of designing objective optical system OBJ, the specifications including wavelength $\lambda 1$ = 408 nm, thickness t1 = 0.0875 mm for protective layer PL1 and numerical aperture NA1 = 0.85 are for the high density optical disc HD, the specifications including wavelength $\lambda 2$ = 658 nm, thickness t2 = 0.6 mm for protective layer PL2 and numerical aperture NA2 = 0.65 are for DVD, and the specifications including wavelength $\lambda 2$ = 658 nm, thickness t3 = 1.2 mm for protective layer PL3 and numerical aperture NA3 = 0.386 are for CD. However, the combination of the wavelength, the thickness of the protective layer and the numerical aperture is not limited to the foregoing.

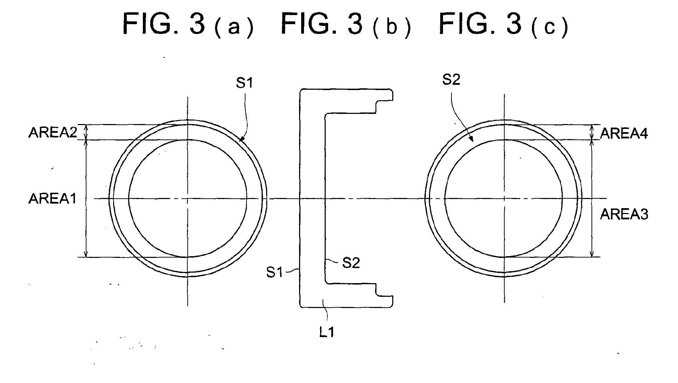

Optical surface S1 closer to the light source on the diffraction lens L1 is divided into first area AREA 1 corresponding to an area within NA2 and second area AREA 2 corresponding to an area from NA1 to NA2 as shown in Fig. 3 (a), and the superposition diffractive structure HOE representing the structure wherein plural ring-shaped zones having therein stair-structure are arranged with their centers positioned on the optical axis is formed in the first area AREA 1, as shown in Fig. 2 (a).

In the superposition diffractive structure HOE formed in the first area AREA 1, step d $\mu$m between stair-structures formed in each ring-shaped zone is established to the value calculated by d = 2 · $\lambda 1$ / (N1 - 1) ($\mu$m), and the number of division for each ring-shaped zone N is established to 5.

In the expression above, $\lambda 1$ represents a wavelength shown in a unit of micron of a laser light flux emitted from the violet semiconductor laser (in this case, $\lambda 1$ = 0.408 $\mu$m), and N1 represents a refractive index for wavelength $\lambda 1$ of the diffractive lens L1 (in this case, N1 = 1.5242).

When the laser light flux having wavelength $\lambda 1$ enters the superposition diffractive structure HOE, an optical path difference of 2 x $\lambda 1$ ($\mu$m) is generated between the adjoining stairs, and the laser light flux with wavelength $\lambda 1$ is hardly given a phase difference to be transmitted as it is without being diffracted. Incidentally, in the following explanation, a light flux that is hardly given a phase difference by the superposition diffractive structure and is transmitted while being left intact is called a zero-order diffracted light.

On the other hand, when the laser light flux having wavelength $\lambda 2$ (in this case, $\lambda 2$ = 0.658 $\mu$m) emitted from the red semiconductor laser enters the superposition diffractive structure HOE, an optical path difference of d x (N2 - 1 - $\lambda 2$ = 0.13 $\mu$m is generated, and an optical path difference between 0.13 x 5 = 0.65 $\mu$m and one wavelength of wavelength $\lambda 2$ is generated for one fifth of one ring-shaped zone which is divided into 5 parts, thus, wavefronts which have been transmitted through adjoining ring-shaped zones is shifted by one wavelength to be overlapped. Namely, the light flux with wavelength $\lambda 2$ is diffracted by the superposition diffractive structure HOE in the one-order direction to become the diffracted light. Incidentally, N2 represents a refractive index of the diffraction lens L2 for wavelength $\lambda 2$ (in this case, N2 = 1.5064). The diffraction efficiency of the first-order diffracted light of the laser light flux with wavelength $\lambda 2$ in this case is 87.5% which represents a sufficient amount of light for recording/reproducing of information for DVD and CD.

Since width $\Lambda_l$ of each ring-shaped zone of the superposition diffractive structure HOE is optimized so that spherical aberration caused by a difference of protective layer thickness between a high density optical disc and DVD may be corrected, spherical aberration corresponding to a difference of protective layer thickness between DVD and CD still remains. In order to correct this remaining spherical aberration, magnification m3 of objective optical system OBJ in the case of conducting recording/reproducing for CD is set to -0.0725 in the second optical pickup apparatus PU2.

Further, optical surface S2 closer to an optical disc on the diffraction lens L1 is divided into third area AREA3 including the optical axis corresponding to an area in NA2 and fourth area AREA4 corresponding to an area from NA2 to NA1 as shown in Fig. 3 (c), and blaze type diffractive structures DOE1 and DOE2 are formed respectively on the third area AREA3 and the fourth area AREA4. Blaze type diffractive structures DOE1 and DOE2 are structures for correcting chromatic aberration of objective optical system OBJ in a violet area.

In the invention, division number N in optional ring-shaped zone of a stair-type diffractive structure, step d $\mu$m between adjoining stair-structures and optical path difference $\phi 2$ to be added to the second light flux by optional ring-shaped zone satisfy the following expressions (1) - (4).

$$3 \leq N \leq 10 \tag{1}$$

$$d = 2m \cdot \lambda 1 / (N1 - 1) \tag{2}$$

$$0 < | \text{ INT } (\phi 2) - \phi 2 | \leq 0.4 \tag{3}$$

$$\phi 2 = d \cdot N \cdot (N2 - 1) / \lambda 2 \tag{4}$$

In the above expressions, m represents positive ingeter of 5 and less and INT ($\phi 2$) represents an integer closest to $\phi 2$.

Objective optical system OBJ is united solidly with liquid crystal element LCD through connecting member HM (see Fig. 1), and it conducts tracking and focusing together with the liquid crystal element LCD.

When conducting recording/reproducing of information for CD, an aperture is switched by the liquid crystal element LCD. The technology to switch an aperture by the liquid crystal element LCD is described, for example, in TOKKAIHEI No. 10-20263, and it is a known technology. Therefore, the detailed explanation for that technology will be omitted here. Due to the foregoing technology, a spot is not stopped down more than necessary and an amount of coma caused by a tilt of CD does not grow too large.

Further, since the superposition diffractive structure HOE is formed only on the first area AREA1 of the diffraction lens L1, the second light flux passing through the second area AREA2 becomes flare components which do not contribute to formation of a spot, on information recording surface RL2 of DVD. Therefore, when conducting recording/reproducing of information for DVD, an aperture is switched by the diffraction lens L1.

In addition to switching of an aperture, the liquid crystal element LCD may also conduct correcting of spherical aberration for a spot formed on information recording surface RL1 of a high density optical disc HD and for a spot formed on information recording surface RL2 of DVD, and thereby, recording/reproducing characteristics for the high density optical disc HD and DVD can be improved.

It is further possible to correct spherical aberration resulting from a difference of protective layer thickness between DVD and CD with the liquid crystal element LCD, and owing to this, the magnification m3 of objective optical system OBJ in the case of conducting recording/reproducing of information for CD can be set to be greater, which makes it possible to improve tracking characteristics.

The technology to correct spherical aberration by the liquid crystal element LCD is described, for example, in TOKKAIHEI No. 10-20263, and it is a known technology. Therefore, the detailed explanation for that technology will be omitted here.

(Second Embodiment)

Next, the Second Embodiment of the invention will be explained as follows, and the same structures therein as those in the First Embodiment are given the same reference symbols, and explanations for them will be omitted here.

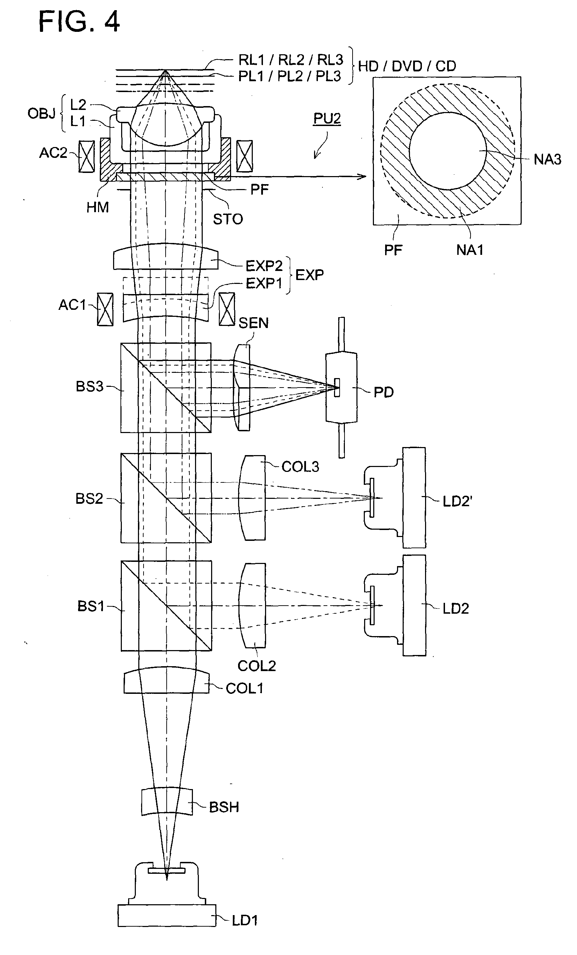

As shown in Fig. 4, optical pickup apparatus PU2 is composed of violet semiconductor laser LD1 emitting the first light flux, red semiconductor laser LD2 emitting the second light flux used for DVD, red semiconductor laser LD2' emitting the second light flux used for CD, photodetector PD to be used commonly for the first and second light fluxes, beam expander optical system EXP including first lens EXP1 and second lens EXP2, uniaxial actuator AC1, objective optical system OBJ, biaxial actuator AC2, first beam splitter BS1, second beam splitter BS2, third beam splitter BS3, first collimating optical system COL1, second collimating optical system COL2, third collimating optical system COL3 and polarizing filter PF (aperture element).

The first light flux for a high density optical disc HD and the second light flux for DVD are emitted respectively from violet semiconductor laser LD1 and red semiconductor laser LD2 under the condition that the light flux is polarized in the prescribed direction (for example, the direction which is perpendicular to the page), and the second light flux to be used for CD is emitted from the red semiconductor laser LD2 in the direction perpendicular to the prescribed direction (for example, the direction that is in parallel with the page).

The polarizing filter PF is united solidly with objective optical system OBJ through connecting member HM (see Fig. 4), and it conducts tracking and focusing together with objective optical system OBJ.

Polarizing filter PF has characteristics to transmit the first light flux for high density optical disc HD polarized in the prescribed direction and the second light flux for DVD and to intercept or reflect the second light flux for CD polarized in the direction perpendicular to the prescribed direction in the area corresponding to a range from NA3 to NA1 (a hatched section in the front view of polarizing filter PF in Fig. 4), and has characteristics to transmit the first light flux for high density optical disc HD, the second light flux for DVD and the second light flux for CD in the area corresponding to the inside of NA3 (a section surrounded by the hatched section in the front view of polarizing filter PF in Fig. 4). Therefore, it is possible to conduct switching of an aperture in the case of conducting recording/reproducing of information for CD by the polarizing filter PF.

Incidentally, since the structure of the objective optical system OBJ in the present embodiment is the same as that of the objective optical system OBJ in the First Embodiment, an explanation of the structure of the objective optical system OBJ in the present embodiment will be omitted here.

When conducting recording/reproducing of information for high density optical disc HD in the optical pickup apparatus PU2, the violet semiconductor laser LD1 is first made to emit light as its path of a ray of light is drawn with solid lines in Fig. 4. A divergent light flux emitted from violet semiconductor laser LD1 is changed in terms of its sectional form from an oval form to a circular form while it is passing through beam shaping element BSH, then, it is converted into a parallel light flux while it is transmitted through first collimating optical system COL1, and it passes successively through first beam splitter BS1, second beam splitter BS2, third beam splitter BS3, first lens EXP1 and second lens EXP2 to become a spot formed by objective optical system OBJ on information recording surface RL1 through protective layer PL1 of high density optical disc HD.

The objective optical system OBJ conducts focusing and tracking with biaxial actuator AC arranged on the circumference of the objective optical system OB. A reflected light flux modulated by information pits on information recording surface RL1 passes again through objective optical system OBJ, second lens EXP2 and first lens EXP1, then, is branched by third beam splitter BS3, and is converged on light-receiving surface of photodetector PD. Thus, it is possible to read information recorded on high density optical disc HD by using output signals of photodetector PD.

When conducting recording/reproducing of information for DVD, the red semiconductor laser LD2 is first made to emit light as its path of a ray of light is drawn with dotted lines in Fig. 4. A divergent light flux emitted from red semiconductor laser LD2 is converted into a parallel light flux while it is transmitted through second collimator optical system COL2, and then, is reflected on the first beam splitter BS1, and passes successively through the second beam splitter BS2, the third beam splitter BS3, first lens EXP1 and second lens EXP2 to become a spot formed by objective optical system OBJ on information recording surface RL2 through protective layer PL2 of DVD.

Then, the objective optical system OBJ conducts focusing and tracking with biaxial actuator AC arranged on the circumference of the objective optical system OBJ. A reflected light flux modulated by information pits on information recording surface RL2 passes again through objective optical system OBJ, second lens EXP2 and first lens EXP1, then, is branched by third beam splitter BS3 to be converged on a light-receiving surface of photodetector PD. Thus, it is possible to read information recorded on high density optical disc HD by using output signals of photodetector PD.

When conducting recording/reproducing of information for CD, the first lens EXP1 is moved by uniaxial actuator UAC in a way that magnification m3 of objective optical system OBJ for a light flux with wavelength λ2 satisfies expression (5) so that a light flux emitted from infrared semiconductor laser LD2' may enter the objective optical system OBJ as a divergent light.

Then, the infrared semiconductor laser LD2' is first made to emit light as its path of a ray of light is drawn with two-dot chain lines in Fig. 4. A divergent light flux emitted from the infrared semiconductor laser LD2' passes through the third collimating optical system COL3 to be converted into a parallel light flux, then, it is reflected by the third beam splitter BS3, and passes through the first lens EXP1 and the second lens EXP2 to arrive at polarizing filter PF as a divergent light.

As stated above, the polarizing filter PF has characteristics to intercept or reflect the second light flux for CD polarized in the direction perpendicular to the prescribed direction, in the area corresponding to an area from NA3 to NA1, and has characteristics to transmit the second light flux for CD in the area corresponding to the inside of NA3. Therefore, only the light flux having arrived at the area corresponding to the inside of NA3 of the polarizing filter PF is transmitted through the polarizing filter PF to become a spot that is formed by the objective optical system OBJ on information recording surface RL3 through protective layer PL3 of CD.

Then, the objective optical system OBJ conducts focusing and tracking with biaxial actuator AC arranged on the circumference of the objective optical system OBJ. A reflected light flux modulated by information pits on information recording surface RL3 passes again through objective optical system OBJ, second lens EXP2 and first lens EXP1, then, is branched by third beam splitter BS3 to be converged on a light-receiving surface of photodetector PD. Thus, it is possible to read information recorded on high density optical disc HD by using output signals of photodetector PD.

Incidentally, in the present embodiment, the first light flux for high density optical disc HD and the second light flux for DVD are emitted respectively from violet semiconductor laser LD1 and red semiconductor laser LD2 under the condition of polarization in the prescribed direction, and the second light flux to be used for CD is emitted from red semiconductor laser LD2' under the condition of polarization in the prescribed perpendicular to the prescribed direction.

However, it is also possible to employ, without being limited to the foregoing, the structure wherein there is arranged a polarization direction changing means (illustration omitted) that can change the polarization direction of the light flux emitted from the red semiconductor laser LD2, depending on a type of an optical disc for which the recording/reproducing of information is conducted. Specifically, when conducting recording/reproducing of information for DVD by the polarization direction changing means of this kind, the second light flux is made to enter the objective optical system OBJ under the condition where it is polarized in the prescribed direction (for example, the direction perpendicular to the page), while, when conducting recording/reproducing of information for CD, the second light flux is made to enter the objective optical system OBJ under the condition where the second light flux is polarized in the direction perpendicular to the prescribed direction (for example, the direction that is in parallel with the page).

As a polarization direction changing means of this kind, the liquid crystal element LCD stated above may be used, or the structure wherein a wavelength plate such as a 1/4 wavelength plate or a 1/2 wavelength plate is rotated mechanically can be used.

Further, spherical aberration of the spot formed on information recording surface RL1 of high density optical disc HD by beam expander optical system EXP, or spherical aberration of the spot formed on information recording surface RL2 of DVD may be corrected, and thereby, recording/reproducing characteristics for the high density optical disc HD and for DVD can be improved.

(Third Embodiment)

Next, the Second Embodiment will be explained as follows, and the same structures therein as those in the First Embodiment are given the same reference symbols, and explanations for them will be omitted here.

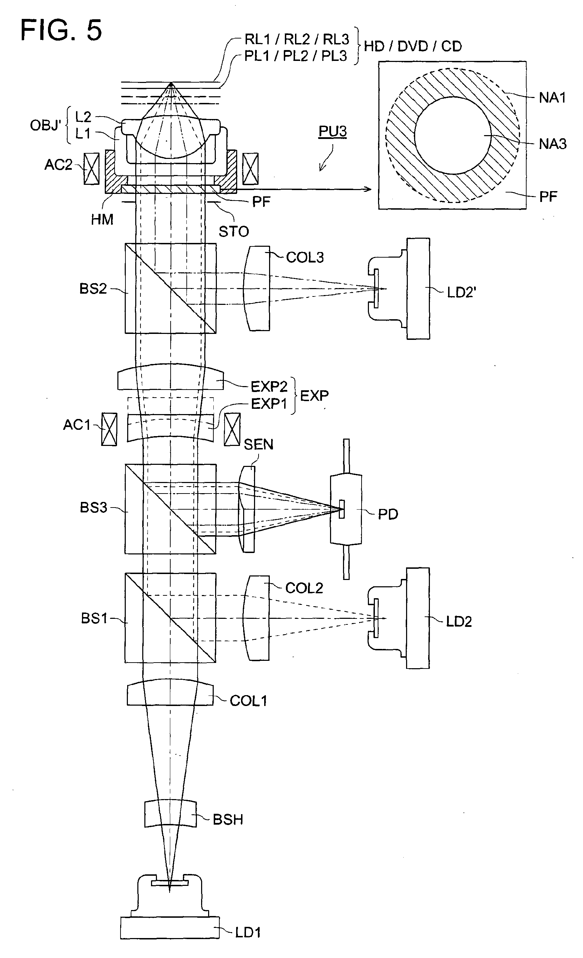

As shown in Fig. 5, optical pickup apparatus PU3 is composed of violet semiconductor laser LD1 emitting the first light flux, red semiconductor laser LD2 emitting the second light flux used for DVD, red semiconductor laser LD2' emitting the second light flux used for CD, photodetector PD to be used commonly for the first and second light fluxes, beam expander optical system EXP including first lens EXP1 and second lens EXP2, uniaxial actuator AC1, objective optical system OBJ', biaxial actuator AC2, first beam splitter BS1, second beam splitter BS2, third beam splitter BS3, first collimating optical system COL1, second collimating optical system COL2, and polarizing filter PF (aperture element).

The first light flux for a high density optical disc HD and the second light flux for DVD are emitted respectively from violet semiconductor laser LD1 and red semiconductor laser LD2 under the condition that the light flux is polarized in the prescribed direction (for example, the direction which is perpendicular to the page), and the second light flux to be used for CD is emitted from the red semiconductor laser LD2 in the direction perpendicular to the prescribed direction (for example, the direction that is in parallel with the page).

Polarizing filter PF has characteristics to transmit the first light flux for high density optical disc HD polarized in the prescribed direction and the second light flux for DVD and to intercept or reflect the second light flux for CD polarized in the direction perpendicular to the prescribed direction in the area corresponding to a range from NA3 to NA1 (a hatched section in the front view of polarizing filter PF in Fig. 5), and has characteristics to transmit the first light flux for high density optical disc HD, the second light flux for DVD and the second light flux for CD in the area corresponding to the inside of NA3 (a section surrounded by the hatched section in the front view of polarizing filter PF in Fig. 5). Therefore, it is possible to conduct switching of an aperture in the case of conducting recording/reproducing of information for CD by the polarizing filter PF.

Incidentally, the objective optical system OBJ will be explained in detail later.

When conducting recording/reproducing of information for high density optical disc HD in the optical pickup apparatus PU3, the violet semiconductor laser LD1 is first made to emit light as its path of a ray of light is drawn with solid lines in Fig. 5. A divergent light flux emitted from violet semiconductor laser LD1 is changed in terms of its sectional form from an oval form to a circular form while it is passing through beam shaping element BSH, then, it is converted into a parallel light flux while it is transmitted through first collimating optical system COL1, and it passes successively through first beam splitter BS1, third beam splitter BS3, first lens EXP1, second lens EXP2 and second beam splitter BS2, to become a spot formed by objective optical system OBJ on information recording surface RL1 through protective layer PL1 of high density optical disc HD.

The objective optical system OBJ' conducts focusing and tracking with biaxial actuator AC arranged on the circumference of the objective optical system OBJ'. A reflected light flux modulated by information pits on information recording surface RL1 passes again through objective optical system OBJ', second beam splitter BS2, second lens EXP2 and first lens EXP1, then, is branched by third beam splitter BS3, and is converged on light-receiving surface of photodetector PD. Thus, it is possible to read information recorded on high density optical disc HD by using output signals of photodetector PD.

When conducting recording/reproducing of information for DVD, the red semiconductor laser LD2 is first made to emit light as its path of a ray of light is drawn with dotted lines in Fig. 5. A divergent light flux emitted from red semiconductor laser LD2 is converted into a parallel light flux while it is transmitted through second collimator optical system COL2, and then, is reflected on the first beam splitter BS1, and passes successively through the third beam splitter BS3, first lens EXP1 and second lens EXP2 and the second beam splitter BS2, to become a spot formed by objective optical system OBJ' on information recording surface RL2 through protective layer PL2 of DVD.

Then, the objective optical system OBJ' conducts focusing and tracking with biaxial actuator AC arranged on the circumference of the objective optical system OBJ'. A reflected light flux modulated by information pits on information recording surface RL2 passes again through objective optical system OBJ', second beam splitter BS2, second lens EXP2 and first lens EXP1, then, is branched by third beam splitter BS3 to be converged on a light-receiving surface of photodetector PD. Thus, it is possible to read information recorded on DVD by using output signals of photodetector PD.

When conducting recording/reproducing of information for CD, the infrared semiconductor laser LD2' is first made to emit light as its path of a ray of light is drawn with two-dot chain lines in Fig. 5. The divergent light flux emitted from the infrared semiconductor laser LD2' is reflected on the second beam splitter BS2 and arrives at polarizing filter PF as a divergent light.

As stated above, the polarizing filter PF has characteristics to intercept or reflect the second light flux for CD polarized in the direction perpendicular to the prescribed direction, in the area corresponding to an area from NA3 to NA1, and has characteristics to transmit the second light flux for CD in the area corresponding to the inside of NA3. Therefore, only the light flux having arrived at the area corresponding to the inside of NA3 of the polarizing filter PF is transmitted through the polarizing filter PF to become a spot that is formed by the objective optical system OBJ' on information recording surface RL3 through protective layer PL3 of CD.

Then, the objective optical system OBJ' conducts focusing and tracking with biaxial actuator AC arranged on the circumference of the objective optical system OBJ'. A reflected light flux modulated by information pits on information recording surface RL3 passes through objective optical system OBJ', second beam splitter BS2, second lens EXP2 and first lens EXP1, then, is branched by third beam splitter BS3 to be converged on a light-receiving surface of photodetector PD. Thus, it is possible to read information recorded on CD by using output signals of photodetector PD.

Next, the structure of objective optical system OBJ' will be explained as follows.

The objective optical system OBJ' is composed of diffraction lens L1 and the objective lens L2 that has a function to converge a laser light flux transmitted through the diffraction lens L1 on an information recording surface of an optical disc and has an aspheric surface on each of its both sides, in the same way as in objective optical system OBJ. Each of the diffraction lens L1 and the objective lens L2 is a plastic lens, and on circumferences of the respective optical functional sections of them, there are formed respectively flange portions FL1 and FL2 each being united solidly with the optical functional section, and both of them are united solidly when a part of the flange portion FL1 and a part of the flange portion FL2 are fitted together.

Since the optical specifications for high density optical disc HD, DVD and CD which are assumed in the case of designing objective optical system OBJ' are the same as those of the objective optical system OBJ, detailed explanation for them is omitted here.

In a similar way as in the objective optical system OBJ, optical surface S1 closer to the light source on diffraction lens L1 is divided into first area AREA1 corresponding to an area inside NA2 and second area AREA2 corresponding to an area from NA2 to NA1, and a blazed diffractive structure DOE3 (illustration omitted) wherein ring-shaped zones in a shape of plural concentric circles whose sectional view including the optical axis is in a serrated form are formed on the first area AREA1.

In the blazed diffractive structure DOE3 formed on the first area AREA1, a depth of a step in the optical axial direction of each ring-shaped zone is determined in a way that diffraction order number n1 of the diffracted light having the maximum diffraction efficiency among diffracted light generated when the first light flux enters is 2, and diffraction order number n2 of the diffracted light having the maximum diffraction efficiency among diffracted light generated when the second light flux enters is 1. Incidentally, manufacture wavelength $\lambda B$ of the blazed diffractive structure DOE3 is set to 390 nm, and a high diffraction efficiency is secured for all wavelengths in a way that the diffraction efficiency of the second order diffracted light of the laser light flux with wavelength $\lambda 1$ is about 97% and the diffraction efficiency of the first order diffracted light of the laser light flux with wavelength $\lambda 2$ is about 94%.

Owing to the functions of the blazed diffractive structure DOE3, spherical aberration caused by a difference of protective layer thickness between high density optical disc HD and DVD is corrected by utilizing a difference between diffracting actions (diffraction angles) for wavelength $\lambda 1$ and wavelength $\lambda 2$, while securing the high diffraction efficiency for each wavelength.

Further, for correcting spherical aberration corresponding to the difference of protective layer thickness between DVD and CD, magnification m3 of objective optical system OBJ' in the case of conducting recording/reproducing of information for CD is set to -0.0725, in the third optical pickup apparatus PU3.

Further, the second light flux passing through the second area AREA2 results in a flare component that does not contribute to spot formation on information recording surface RL2 of DVD, because the blazed diffractive structure DOE3 is formed only on the first area AREA1 of diffraction lens L1. When conducting recording/reproducing of information for DVD, therefore, the diffraction lens L1 switches an aperture.

Incidentally, beam expander optical system EXP is a spherical aberration correcting means for correcting spherical aberration for a spot formed on information recording surface RL1 of high density optical disc HD or a spot formed on information recording surface RL2 of DVD, which can improve recording/reproducing characteristics for the high density optical disc HD and for DVD.

(Example 1)

Next, Example of objective optical system OBJ that is suitable for the second optical pickup apparatus PU2 will be explained.

Table 1 shows lens data of optical elements.

(Table 1 - 1)

Lens Data Table
(Optical specification)

HD  = NA1=0.85, f1=2.200mm, λ1=408nm, m1=0, t1=0.0875mm

DVD = NA2=0.65, f2=2.309mm, λ2$_{DVD}$=658nm, m2=0, t2=0.6mm

CD  = NA3=0.386, f3=2.309mm, λ2$_{CD}$=658nm, m3=-0.0725, t3=1.2mm
(Paraxial data)

| Sur-face No. | r (mm) | d1 (mm) | d2 (mm) | d3 (mm) | Nλ1 | Nλ2$_{DVD}$ | Nλ2$_{CD}$ | vd |
|---|---|---|---|---|---|---|---|---|
| OBJ | | ∞ | ∞ | 33.000 | | | | |
| STO | | 0.050 | 0.050 | 0.050 | | | | |
| 1 | *1 | 0.900 | 0.900 | 0.900 | 1.52424 | 1.50643 | 1.50497 | 56.5 |
| 2 | *1 | 0.050 | 0.050 | 0.050 | | | | |
| 3 | 1.445 | 2.510 | 2.510 | 2.510 | 1.55965 | 1.54062 | 1.53724 | 56.3 |
| 4 | -4.540 | 0.679 | 0.477 | 0.267 | | | | |
| 5 | ∞ | 0.0875 | 0.600 | 1.200 | 1.62110 | 1.57975 | 1.57326 | 30.0 |
| 6 | ∞ | | | | | | | |

*1 (Following Table)


(Paraxial radius of curvature, aspheric surface coefficient, diffraction order number, manufacture wavelength, optical path function coefficient for the first and second surfaces)

| | First surface | | Second surface | |
|---|---|---|---|---|
| | AREA1 (0≤h≤1.49) | AREA2 (1.49≤h) | AREA3 (0≤h≤1.49) | AREA4 (1.49≤h) |
| r | ∞ | 231.761 | -117.433 | -167.005 |
| κ | 0.0000E+00 | 0.0000E+00 | 0.0000E+00 | 9.6672E+01 |
| A4 | 0.0000E+00 | -1.2634E-04 | -2.3039E-03 | 1.0847E-03 |
| A6 | 0.0000E+00 | -1.4443E-03 | 3.1515E-03 | -2.2698E-04 |
| A8 | 0.0000E+00 | 6.3328E-04 | -2.1791E-04 | 4.0064E-04 |
| A10 | 0.0000E+00 | -6.8934E-05 | -5.9061E-05 | -1.3815E-05 |
| n1/n2/n3 | 0/+1/+1 | − | +2/+1/+1 | +2/+1/+1 |
| λB | 658nm | − | 390nm | 408nm |
| B2 | 4.7000E-03 | 0.0000E+00 | -5.3000E-03 | -5.2595E-03 |
| B4 | -5.5308E-04 | 0.0000E+00 | 5.6232E-04 | -3.8500E-04 |
| B6 | -2.5919E-04 | 0.0000E+00 | -7.7644E-04 | -2.8980E-04 |
| B8 | -2.0155E-05 | 0.0000E+00 | 5.1093E-05 | 5.6214E-05 |
| B10 | 2.0712E-07 | 0.0000E+00 | 1.4877E-05 | -1.4307E-05 |

(Table 1 - 2)

| (Aspheric surface coefficients for the third and fourth surfaces) | | |
|---|---|---|
| | Third surface | Fourth surface |
| k | -6.6105E-01 | -1.5745E+02 |
| A4 | 1.1439E-02 | 1.0519E-01 |
| A6 | 2.5153E-03 | -1.1661E-01 |
| A8 | 8.3248E-06 | 1.0617E-01 |
| A10 | 2.9389E-04 | -7.0962E-02 |
| A12 | 6.6343E-05 | 2.7343E-02 |
| A14 | -4.2105E-05 | -4.3966E-03 |
| A16 | -3.6643E-06 | 0.0000E+00 |
| A18 | 7.9754E-06 | 0.0000E+00 |
| A20 | -1.2239E-06 | 0.0000E+00 |

Optical specifications in the case of using the high density optical disc HD include wavelength $\lambda 1$ = 408 nm, thickness t1 of protective layer PL1 = 0.0875 mm, numerical aperture NA1 = 0.85, focal length f1 = 2.200 mm and magnification m1 = 0, optical specifications in the case of using DVD include wavelength $\lambda 2$ = 658 nm, protective layer PL2 thickness t2 = 0.6 mm, numerical aperture NA2 = 0.65, focal length f2 = 2.309 mm and magnification m2 = 0 and optical specifications in the case of using CD include wavelength $\lambda 2$ = 658 nm, protective layer PL3 thickness t3 = 1.2 mm, numerical aperture $NA_3$ = 0.386, focal length f3 = 2.309 mm and magnification $m_3$ = -0.0725.

An aspheric surface on the optical surface is expressed by the expression wherein coefficients in Table 1 are substituted in the following Numeral 1, when X (mm) represents an amount of transformation from a plane that is tangent to the aspheric surface at its vertex, h (mm) represents a height in the direction perpendicular to the optical axis and r (mm) represents a radius of curvature, wherein $\kappa$ represents a conic constant and $A_{2i}$ represents an aspheric surface coefficient.

```
Numeral (1)
```

$$x = \frac{h^2 / r}{1 + \sqrt{1 - (1 + \kappa)(h/r)^2}} + \sum_{i=2} A_{2i} h^{2i}$$

In Table 1, NA1, NA2 and NA3 represent numerical apertures respectively of high density optical disc HD, DVD and CD, while, f1, f2 and f3 represent focal lengths (mm) respectively of high density optical disc HD, DVD and CD, and $\lambda 1$, $\lambda 2_{DVD}$ and $\lambda 2_{CD}$ represent design wavelength (nm) respectively of high density optical disc HD, DVD and CD, then, m1, m2 and m3 represent magnifications respectively for high density optical disc HD, DVD and CD, and t1, t2 and t3 represent protective layer thicknesses (mm) respectively of high density optical disc HD, DVD and CD, while, OBJ represents an object point (a luminous point of a semiconductor laser light source), STO represents a diaphragm, r represents a radius of curvature (mm), d1, d2 and d3 represent respectively surface distances (mm) for high density optical disc HD, DVD and CD, $N\lambda 1$, $N\lambda 2_{DVD}$ and $N\lambda 2_{CD}$ represent respectively refractive indexes for design wavelengths respectively of high density optical disc HD, DVD and CD, vd represents Abbe's number for d line (587.6 nm), n1, n2 and n3 represent respectively diffraction order numbers of beams for recording/reproducing respectively for high density optical disc HD, DVD and CD, and $\lambda B$ represents respectively manufacture wavelengths (nm) for the superposition diffractive structure HOE and for blazed diffractive structures DOE1 and DOE2.

The diffractive structure in each example is expressed by an optical path difference that is added by the diffractive structure to a transmission wavefront. Such optical path difference is expressed by optical path difference function $\phi b$ (mm) defined by the following Numeral 2, when $\lambda$ represents a wavelength of an incident light flux, $\lambda_B$ represents a manufacture wavelength of the diffractive structure, h (mm) represents a height in the direction perpendicular to the optical axis, $B_{2i}$ represents an optical path difference function coefficient and n represents the diffraction order number.

Numeral 2

$$\phi_b = \lambda\!\!\!\diagup\!\!\!_{\lambda_B} \times n \times \sum_{j=1} B_{2j} h^{2j}$$

When a laser light flux with wavelength λ3 = 785 nm enters the superposition diffractive structure HOE provided on diffraction lens L1, an optical path of 1 x λ3 (μm) is generated between adjoining steps because of λ3 ≈ 2 x λ1. Therefore, the laser light flux with wavelength λ3 also is not given a phase difference substantially similarly to the laser light flux with wavelength λ1, and is transmitted as it is (zero-order diffracted light). Accordingly, when a light flux with a wavelength of 785 nm as a wavelength for recording/reproducing for CD is used (NA3 = 0.45), it is necessary to establish the magnification m3 of objective optical system OBJ to be smaller than in the occasion to use a light flux with a wavelength of 658 nm, because an effect of correcting spherical aberration by the superposition diffractive structure HOE is not obtained.

Specifically, the magnification m3 is established to be -0.130.

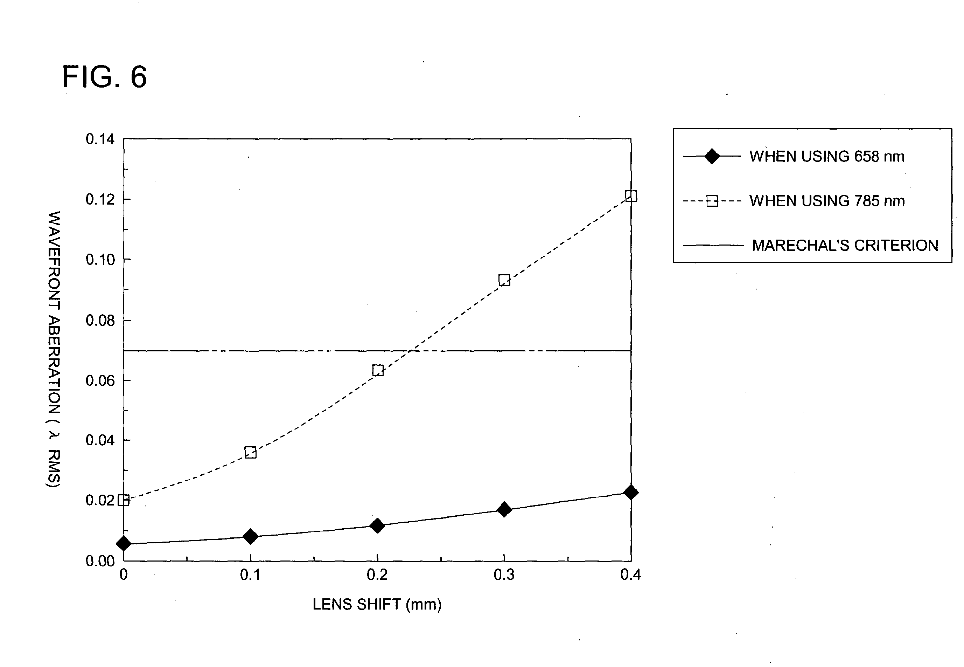

Fig. 6 shows lens shift characteristics for the objective optical system OBJ, for the occasion where 658 nm (NA3 = 0.386, m3 = -0.0725) is used as a wavelength for recording/reproducing of CD and for the occasion where 785 nm (NA3 = 0.45, m3 = -0.130) is used.

As is apparent from the foregoing, the magnification m3 can be made greater by using the light flux with a wavelength of 658 nm which is the same as that for DVD as a wavelength for recording/reproducing of CD, and the numerical aperture NA3 can further be set to be smaller, which makes it possible to improve tracking characteristics of the objective optical system OBJ.

**EFFECTS OF THE INVENTION**

The invention makes it possible to obtain an optical pickup apparatus and an optical information recording and/or reproducing apparatus wherein compatibility for a high density optical disc, DVD and CD is attained, and occurrence of coma aberration caused by tracking of an objective lens in the case of conducting recording/reproducing for CD can be reduced.

**Claims**

1.  An optical pickup apparatus comprising:

    a first light source emitting a first light flux having wavelength of λ1;
    a second light source emitting a second light flux having wavelength of λ2, λ2 being different from λ1; and
    a light-converging optical system, which includes an objective lens,

    wherein a diffractive structure is provided on at least one optical surface of the light-converging optical system, and wherein the first light flux is utilized to conduct information recording and/or reproducing for a first optical information recording medium, which has a protective layer having a thickness of t1,
    the second light flux is utilized to conduct information recording and/or reproducing for a second optical information recording medium, which has a protective layer having a thickness of t2, t2 being same as or larger than t1, a recording density of the second optical information recording medium being less than a recording density of the first optical information recording medium, and
    the second light flux is utilized to conduct information recording and/or reproducing for a third optical information recording medium, which has a protective layer having a thickness of t3, t3 being larger than t2, an recording density of the third information recording medium being less than the recording density of the second optical information recording medium.

2.  The optical pickup apparatus of claim 1, wherein the light-converging optical system including the objective lens and a diffraction lens having an optical surface on which the diffractive structure is formed, and wherein the objective lens is capable of converging the first light flux, which has passed through the diffraction lens, onto an information recording surface of the first optical information recording medium, and is capable of converging the second light flux, which has passed through the diffraction lens, onto each of an information recording surface of the second optical information recording medium and an information recording surface of the third optical information recording medium.

3. The optical pickup apparatus of claim 1, wherein the diffractive structure is a superposition diffractive structure, which includes a plurality of ring-shaped zones concentrically formed around an optical axis of the light-converging optical system, each of the ring-shaped zones further having thereon a plurality of stepwise structures, and wherein the superposition diffractive structure generates substantially no phase difference to the first light flux, and generates a phase difference to the second light flux.

4. The optical pickup apparatus of claim 3, wherein the following relation is satisfied:

$$t1 < t2$$

5. The optical pickup apparatus of claim 4, wherein the following relations are satisfied:

$$t1 \leq 0.2 \text{ mm}$$

$$0.55 \text{ mm} \leq t2 \leq 0.65 \text{ mm}$$

6. The optical pickup apparatus of claim 4, wherein the following relations'are satisfied:

$$\lambda1 \leq 450 \text{ nm}$$

$$630 \text{ nm} \leq \lambda2 \leq 680 \text{ nm}$$

$$3 \leq N \leq 10$$

$$d = 2m \cdot \lambda1 / (N1 - 1)$$

$$0 < |INT (\phi2) - \phi2| \leq 0.4$$

$$\phi2 = d \cdot N \cdot (N2 - 1) / \lambda2$$

where N represents the number of the stepwise structure on a given ring-shaped zone of the superposition diffractive structure; d μm represents a step height between adjoining stepwise structures on the given ring-shaped zone; $\phi2$ represents a phase difference, which is given to the second light flux by the given ring-shaped zone; m represent an integer not larger than 5; N1 represents a refractive index of an optical element including the optical surface on which the diffractive structure is provided to a light flux having a wavelength of $\lambda1$; N2 represents a refractive index of the optical element including the optical surface on which the diffractive structure is provided to a light flux having a wavelength of $\lambda2$; and INT($\phi2$) represents an integer, which is closest to $\phi2$.

7. The optical pickup apparatus of claim 1, wherein the diffractive structure is a blazed diffractive structure, which includes a plurality of ring-shaped zones concentrically formed around an optical axis of the light-converging optical system, and a cross-sectional shape of the blazed diffractive structure including the optical axis is a saw-tooth shape, and
wherein the blazed diffractive structure satisfies the following relation:

$$n2 < n1$$

where n1 represents a diffraction order of a first diffracted light, which is generated from the blazed diffractive structure when the first light flux is incident to the blazed diffractive structure, and n1 is an integer not smaller than 2; and n2 represents a diffraction order of a second diffracted light, which is generated from the blazed diffractive structure when the second light flux is incident to the blazed diffractive structure.

8. The optical pickup apparatus of claim 7, wherein the following relation is satisfied:

$$t1 = t2$$

9. The optical pickup apparatus of claim 7, wherein the combination of n1 and n2 is selected from (2, 1), (3, 2), (5, 3), (8, 5) and (10, 6), and
wherein the following relations are satisfied:

$$\lambda1 \leq 450 \text{ nm}$$

$$630 \text{ nm} \leq \lambda2 \leq 680 \text{ nm}$$

10. The optical pickup apparatus of claim 1, wherein the diffractive structure is a stepwise diffractive structure, which is formed on an optical surface having a convex or concave macroscopic structure, the stepwise diffractive structure includes a plurality of ring-shaped zones concentrically formed around an optical axis of the light-converging optical system, and a cross-sectional shape of the blazed diffractive structure including the optical axis is a stepwise shape, and
wherein the stepwise diffractive structure satisfies the following relation:

$$n2 < n1$$

where n1 represents a diffraction order of a first diffracted light, which is generated from the stepwise diffractive structure when the first light flux is incident to the stepwise diffractive structure, and n1 is an integer not smaller than 2; and n2 represents a diffraction order of a second diffracted light, which is generated from the stepwise diffractive structure when the second light flux is incident to the stepwise diffractive structure.

11. The optical pickup apparatus of claim 10, wherein the following relation is satisfied:

$$t1 = t2$$

12. The optical pickup apparatus of claim 7, wherein the combination of n1 and n2 is selected from (2, 1), (3, 2), (5, 3), (8, 5) and (10, 6), and
wherein the following relations are satisfied:

$$\lambda1 \leq 450 \text{ nm}$$

$$630 \text{ nm} \leq \lambda2 \leq 680 \text{ nm}$$

13. The optical pickup apparatus of claim 2, wherein the objective lens and the diffraction lens are integrally formed, wherein the optical pickup apparatus further comprises an actuator, which is capable of moving the objective lens and the diffraction lens in the direction perpendicular to an optical axis of the light-converging optical system.

14. The optical pickup apparatus of claim 1, wherein NA2 represents a numerical aperture of the objective lens during conducting information recording and/or reproducing for the second optical information recording medium with the second light flux, and the diffractive structure is formed on a region corresponding to NA2, and
wherein the following relations are satisfied:

$$t1 \leq 0.2 \text{ mm}$$

$$0.55 \text{ mm} \leq t2 \leq 0.65 \text{ mm}$$

15. The optical pickup apparatus of claim 5, wherein the light-converging optical system including the objective lens and a diffraction lens having an optical surface on which the diffractive structure is formed,
wherein the objective lens is capable of converging the first light flux, which has passed through the diffraction lens, onto an information recording surface of the first optical information recording medium, and is capable of converging the second light flux, which has passed through the diffraction lens, onto each of an information recording surface of the second optical information recording medium and an information recording surface of the third optical information recording medium, and
wherein the following relations are satisfied:

$$1.15 \text{ mm} \leq t3 \leq 1.25 \text{ mm}$$

$$-0.01 \leq m3 < 0$$

where m3 represents a magnification of an optical system combining the objective lens and the diffraction lens during conducting information recording and/or reproducing for the third optical information recording medium with the second light flux.

16. The optical pickup apparatus of claim 5, comprising a spherical aberration-compensating means, which compensates a spherical aberration generated during conducting information recording and/or reproducing for the third optical information recording medium with the second light flux, and
wherein the following relation is satisfied:

$$1.15 \text{ mm} \leq t3 \leq 1.25$$

17. The optical pickup apparatus of claim 1, wherein NA3 represents a numerical aperture of the objective lens during conducting information recording and/or reproducing for the third optical information recording medium with the second light flux, and
wherein the following relation is satisfied:

$$0.36 < NA3 < 0.43$$

18. The optical pickup apparatus of claim 1, wherein NA2 represents a numerical aperture of the objective lens during conducting information recording and/or reproducing for the second optical information recording medium with the second light flux, and NA3 represents a numerical aperture of the objective lens during conducting information recording and/or reproducing for the third optical information recording medium with the second light flux, and
wherein the optical pickup apparatus further comprises a aperture-controlling element to controlling an aperture of the objective lens depending on the difference between NA2 and NA3.

19. The optical pickup apparatus of claim 18, wherein the aperture-controlling element includes a polarization-changing means to change a polarized surface of the second light flux incident to the objective lens in a predetermined amount based on a control signal from a control signal generator.

20. The optical pickup apparatus of claim 19, wherein the polarization-controlling means are constituted by a liquid crystal element.

**21.** The optical information recording and/or reproducing apparatus comprising:

the optical pickup apparatus according to claim 1; and
a supporting section to support the first optical information recording medium, the second optical information recording medium or the third optical information recording medium during conducting information recording and/or reproducing.

**22.** An optical pickup apparatus comprising:

a first light source emitting a first light flux having wavelength of $\lambda 1$;
a second light source emitting a second light flux having wavelength of $\lambda 2$, $\lambda 2$ being different from $\lambda 1$;
a third light source emitting a third light flux having wavelength of $\lambda 2$; and
a light-converging optical system, which includes an objective lens,

wherein a diffractive structure is provided on at least one optical surface of the light-converging optical system,
wherein the first light flux is utilized to conduct information recording and/or reproducing for a first optical information recording medium, which has a protective layer having a thickness of t1,
the second light flux is utilized to conduct information recording and/or reproducing for a second optical information recording medium, which has a protective layer having a thickness of t2, t2 being same as or larger than t1, a recording density of the second optical information recording medium being less than a recording density of the first optical information recording medium, and
the third light flux is utilized to conduct information recording and/or reproducing for a third optical information recording medium, which has a protective layer having a thickness of t3, t3 being larger than t2, an recording density of the third information recording medium being less than the recording density of the second optical information recording medium.

**23.** The optical pickup apparatus of claim 1 or 22, wherein the following relation is satisfied:

$$0.2 \leq |\,\text{Int}(\lambda 2/\lambda 1) - \lambda 2 /\lambda 1\,| \leq 0.5$$

where Int ($\lambda 2/\lambda 1$) represents an integer, which is closest to $\lambda 2 /\lambda 1$.

**24.** The optical pickup apparatus of claim 1 or 23, wherein the following relations are satisfied:

$$\lambda 1 \leq 450 \text{ nm}$$

$$630 \text{ nm} \leq \lambda 2 \leq 680 \text{ nm}$$

**25.** The optical pickup apparatus of claim 22, wherein the light-converging optical system including the objective lens and a diffraction lens having an optical surface on which the diffractive structure is formed, and
wherein the objective lens is capable of converging the first light flux, which has passed through the diffraction lens, onto an information recording surface of the first optical information recording medium, is capable of converging the second light flux, which has passed through the diffraction lens, onto information recording surface of the second optical information recording medium, is capable of converging the third light flux, which has passed through the diffraction lens, onto information recording surface of the third optical information recording medium.

**26.** The optical pickup apparatus of claim 1 or 22, wherein the diffractive structure is formed on at least an optical surface of the objective lens.

**27.** The optical pickup apparatus of claim 22, wherein the diffractive structure is a superposition diffractive structure, which includes a plurality of ring-shaped zones concentrically formed around an optical axis of the light-converging optical system, each of the ring-shaped zones further having thereon a plurality of stepwise structures, and
wherein the superposition diffractive structure generates substantially no phase difference to the first light flux, and generates a phase difference to each of the second light flux and the third light flux.

**28.** The optical pickup apparatus of claim 27, wherein the following relations are satisfied:

$$t1 \leq 0.2 \text{ mm}$$

$$0.55 \text{ mm} \leq t2 \leq 0.65 \text{ mm}$$

**29.** The optical pickup apparatus of claim 27, wherein the following relations are satisfied:

$$\lambda1 \leq 450 \text{ nm}$$

$$630 \text{ nm} \leq \lambda2 \leq 680 \text{ nm}$$

$$3 \leq N \leq 10$$

$$d = 2m \cdot \lambda1 / (N1 - 1)$$

$$0 < | \text{INT} (\phi2) - \phi2 | \leq 0.4$$

$$\phi2 = d \cdot N \cdot (N2 - 1) / \lambda2$$

where N represents the number of the stepwise structure on a given ring-shaped zone of the superposition diffractive structure; d µm represents a step height between adjoining stepwise structures on the given ring-shaped zone; $\phi2$ represents a phase difference, which is given to each of the second light flux and the third light flux by the given ring-shaped zone; m represent an integer not larger than 5; N1 represents a refractive index of an optical element including the optical surface on which the diffractive structure is provided to a light flux having a wavelength of $\lambda1$; N2 represents a refractive index of the optical element including the optical surface on which the diffractive structure is provided to a light flux having a wavelength of $\lambda2$; and INT($\phi2$) represents an integer, which is closest to $\phi2$.

**30.** The optical pickup apparatus of claim 22, wherein the diffractive structure is a blazed diffractive structure, which includes a plurality of ring-shaped zones concentrically formed around an optical axis of the light-converging optical system, and a cross-sectional shape of the blazed diffractive structure including the optical axis is a saw-tooth shape, and wherein the blazed diffractive structure satisfies the following relation:

$$n2 < n1$$

where n1 represents a diffraction order of a first diffracted light, which is generated from the blazed diffractive structure when the first light flux is incident to the blazed diffractive structure, and n1 is an integer not smaller than 2; and n2 represents a diffraction order of each of a second diffracted light and a third diffracted light, which is generated from the blazed diffractive structure when each of the second light flux and the third light flux is incident to the blazed diffractive structure.

**31.** The optical pickup apparatus of claim 22, wherein the diffractive structure is a stepwise diffractive structure, which is formed on an optical surface having a convex or concave macroscopic structure, the stepwise diffractive structure includes a plurality of ring-shaped zones concentrically formed around an optical axis of the light-converging optical system, and a cross-sectional shape of the blazed diffractive structure including the optical axis is a stepwise shape, and
wherein the stepwise diffractive structure satisfies the following relation:

$$n2 < n1$$

where n1 represents a diffraction order of a first diffracted light, which is generated from the stepwise diffractive structure when the first light flux is incident to the stepwise diffractive structure, and n1 is an integer not smaller than 2; and n2 represents a diffraction order of each of a second diffracted light and a third diffracted light, which is generated from the stepwise diffractive structure when each of the second light flux and the third light flux is incident to the stepwise diffractive structure.

32. The optical pickup apparatus of claim 27, 28, 30 or 31,
wherein the following relation is satisfied:

$$t1 < t2$$

33. The optical pickup apparatus of claim 30 or 31, wherein the combination of n1 and n2 is selected from (2, 1), (3, 2), (5, 3), (8, 5) and (10, 6), and
wherein the following relations are satisfied:

$$\lambda 1 \leq 450 \text{ nm}$$

$$630 \text{ nm} \leq \lambda 2 \leq 680 \text{ nm}$$

34. The optical pickup apparatus of claim 25, wherein the objective lens and the diffraction lens are integrally formed, wherein the optical pickup apparatus further comprises an actuator, which is capable of moving the objective lens and the diffraction lens in the direction perpendicular to an optical axis of the light-converging optical system.

35. The optical pickup apparatus of claim 22, wherein NA2 represents a numerical aperture of the objective lens during conducting information recording and/or reproducing for the second optical information recording medium with the second light flux, and the diffractive structure is formed on a region corresponding to NA2, and
wherein the following relations are satisfied.

$$t1 \leq 0.2 \text{ mm}$$

$$0.55 \text{ mm} \leq t2 \leq 0.65 \text{ mm}$$

36. The optical pickup apparatus of claim 28, wherein the light-converging optical system including the objective lens and a diffraction lens having an optical surface on which the diffractive structure is formed,
wherein the objective lens is capable of converging the first light flux, which has passed through the diffraction lens, onto an information recording surface of the first optical information recording medium, is capable of converging the second light flux, which has passed through the diffraction lens, onto an information recording surface of the second optical information recording medium, and is capable of converging the third light flux, which has passed through the diffraction lens, onto an information recording surface of the third optical information recording medium, and
wherein the following relations are satisfied:

$$1.15 \text{ mm} \leq t3 \leq 1.25 \text{ mm}$$

$$-0.01 \leq m3 < 0$$

where m3 represents a magnification of an optical system combining the objective lens and the diffraction lens during conducting information recording and/or reproducing for the third optical information recording medium with the third light flux.

37. The optical pickup apparatus of claim 28, comprising a spherical aberration-compensating means, which compensates a spherical aberration generated during conducting information recording and/or reproducing for the third optical information recording medium with the third light flux, and
wherein the following relation is satisfied.

$$1.15 \text{ mm} \leq t3 \leq 1.25$$

38. The optical pickup apparatus of claim 22, wherein NA3 represents a numerical aperture of the objective lens during conducting information recording and/or reproducing for the third optical information recording medium with the third light flux, and
wherein the following relation is satisfied.

$$0.36 < NA3 < 0.43$$

39. The optical pickup apparatus of claim 22, wherein NA2 represents a numerical aperture of the objective lens during conducting information recording and/or reproducing for the second optical information recording medium with the second light flux, and NA3 represents a numerical aperture of the objective lens during conducting information recording and/or reproducing for the third optical information recording medium with the third light flux, and
wherein the optical pickup apparatus further comprises a aperture-controlling element to controlling an aperture of the objective lens depending on the difference between NA2 and NA3.

40. The optical pickup apparatus of claim 39, wherein the aperture-controlling element includes a polarization-changing means to change a polarized surface of each of the second light flux and third light flux incident to the objective lens in a predetermined amount based on a control signal from a control signal generator.

41. The optical pickup apparatus of claim 40, wherein the polarization-controlling means are constituted by a liquid crystal element.

42. The optical information recording and/or reproducing apparatus comprising:

the optical pickup apparatus according to claim 22; and
a supporting section to support the first optical information recording medium, the second optical information recording medium or the third optical information recording medium during conducting information recording and/or reproducing.

# FIG. 1

FIG. 2 (a)     FIG. 2 (b)     FIG. 2 (c)

FIG. 3 (a)   FIG. 3 (b)   FIG. 3 (c)

# FIG. 4

FIG. 5

FIG. 6

LENS SHIFT (mm)

WAVEFRONT ABERRATION ( $\lambda$ RMS)

WHEN USING 658 nm

WHEN USING 785 nm

MARECHAL'S CRITERION

EP 1 538 613 A2